Europäisches Patentamt

European Patent Office

Office européen des brevets

(11) Numéro de publication: **0 263 016 B1**

# FASCICULE DE BREVET EUROPEEN

(45) Date de publication de fascicule du brevet:
**12.06.91**

(51) Int. Cl.⁵: **G01D 5/26**, G01B 11/02

(21) Numéro de dépôt: **87402096.9**

(22) Date de dépôt: **21.09.87**

(54) **Capteur de déplacement et de proximité à trois fibres optiques.**

(30) Priorité: **22.09.86 FR 8613317**

(43) Date de publication de la demande:
**06.04.88 Bulletin 88/14**

(45) Mention de la délivrance du brevet:
**12.06.91 Bulletin 91/24**

(84) Etats contractants désignés:
**AT BE CH DE ES FR GB LI NL SE**

(56) Documents cités:

**IBM TECHNICAL DISCLOSURE BULLETIN, vol. 28, no. 1, juin 1985, pages 394-395; New York, US; "Compensation scheme for differential fiber reflectometers"**

**PATENT ABSTRACTS OF JAPAN, vol. 6, no. 5 (P-97)[883], 13 janvier 1982; & JP-A-56 130 609 (HITACHI SEISAKUSHO K.K.) 13-10-1981**

**PATENT ABSTRACTS OF JAPAN, vol. 8, no. 147 (P-285)[1584], 10 juillet 1984; & JP-A-59 46 808 (OKI DENKI KOGYO K.K.) 16-03-1984**

**PATENT ABSTRACTS OF JAPAN, vol. 10, no. 38 (P-428)[2095], 14 février 1986; JP-A-60 184**

**209 (SUMITOMO DENKI KOGYO K.K.) 19-09-1985**

**PATENT ABSTRACTS OF JAPAN, vol. 9, no. 167 (P-372)[1890], 12 juillet 1985; & JP-A-60 44 806 (SHOWA DENSEN DENRAN K.K.) 11-03-1985**

(73) Titulaire: **SEXTANT Avionique
128, Avenue de la République
F-75011 Paris(FR)**

Titulaire: **Battarel, Claude
UPIE
F-26120 Chabeuil(FR)**

(72) Inventeur: **Taillebois, Jacques
9, Allée des Hortensias
F-26500 Bourg les Valence(FR)**
Inventeur: **Battarel, Claude
Upie
F-26120 Chabeuil(FR)**

(74) Mandataire: **Bloch, Gérard et al
2, square de l'Avenue du Bois
F-75116 Paris(FR)**

## Description

La présente invention concerne un capteur de déplacement et de proximité, à fibres optiques, qui permet d'effectuer une mesure précise de la distance entre l'extrémité d'une sonde, de petites dimensions et de grande résistance aux conditions ambiantes, telles que vibrations et variations extrêmes de température, et un objet-cible de nature quelconque. La plupart des capteurs de ce type comprennent trois fibres ou faisceaux de fibres, ce qui permet, par la mesure d'un rapport de puissances reçues, d'éliminer ou au moins atténuer l'effet de variations de réflectivité de la cible. Il existe des capteurs à deux émetteurs et un récepteur et d'autres capteurs à un émetteur et deux récepteurs.

Ce dernier type de capteur est le plus performant, l'émetteur étant unique, et les deux récepteurs effectuant le rapport des puissances reçues en provenance d'un seul émetteur.

Aussi, ce rapport de puissances devient indépendant de l'intensité du rayonnement émis, même si cette intensité varie avec la température ambiante et le vieillissement de la source lumineuse, ordinairement constituée par une diode électroluminescente. Cette considération est d'autant plus significative que les photodiodes de réception peuvent être intégrées sur un même substrat monolithique de silicium et donc présenter des caractéristiques et des températures de fonctionnement très voisines, ce qui ne serait pas le cas pour des capteurs à émetteurs distincts.

Le brevet US No. 3 327 584 et le brevet japonais JP-A-59-46808 décrivent brièvement un tel capteur. Un capteur similaire est décrit dans le brevet français 2 112 717, qui décrit l'influence de l'écartement latéral entre les faisceaux de fibres.

Par ailleurs, l'article "Compensation scheme for differential fiber reflectometers" dans le IBM TECHNICAL DISCLOSURE BULLETIN, Vol 28, No. 1, juin 1985, pages 394-395, décrit un capteur à trois fibres optiques de natures différentes.

Tous ces capteurs connus ont pour inconvénient commun de ne pas avoir une courbe de réponse présentant au moins une partie linéaire, ce qui limite la précision de la mesure.

La présente invention vise à pallier les inconvénients précédents.

A cet effet, elle a tout d'abord pour objet un capteur de proximité et de déplacement à trois fibres optiques de natures respectivement différentes, l'une émettrice et les deux autres réceptrices, dont des extrémités formant une sonde sont situées dans un même plan, l'autre extrémité d'une des fibres étant reliée à un émetteur de rayonnement, les autres extrémités des deux autres fibres étant reliées à des détecteurs distincts, caractérisé par le fait que les fibres optiques réceptrices ont des ouvertures numériques différentes, la fibre de plus grande ouverture numérique étant plus proche de la fibre émettrice que celle de faible ouverture numérique.

La présente invention a également pour objet un capteur de proximité et de déplacement à trois fibres optiques de natures respectivement différentes, l'une émettrice et les deux autres réceptrices, dont des extrémités formant une sonde sont situées dans un même plan, l'autre extrémité d'une des fibres étant reliée à un émetteur de rayonnement, les autres extrémités des deux autres fibres étant reliées à des détecteurs distincts, caractérisé par le fait que l'une au moins des fibres réceptrices a son axe optique incliné sur l'axe optique de la fibre émettrice, pour qu'il existe une position proche de la cible, pour laquelle toute la portion de la cible vue par la fibre la plus inclinée est illuminée, alors que toute la portion de la cible vue par la fibre la moins inclinée n'est pas illuminée, et une position éloignée de la cible, pour laquelle toute la portion de la cible vue par la fibre la plus inclinée n'est pas illuminée, alors qu'une partie relativement importante de la portion de la cible vue par la fibre la moins inclinée est illuminée.

La présente invention sera mieux comprise à l'aide de la description suivante de deux formes de réalisation du capteur de l'invention, en référence aux dessins annexés, sur lesquels :

- la figure 1 est une vue schématique d'une première forme de réalisation du capteur de l'invention ;
- la figure 2A représente la courbe du rapport des puissances reçues par les fibres réceptrices du capteur de la figure 1 et la figure 2B, les courbes des puissances reçues par les fibres réceptrices ;
- la figure 3A est une vue schématique d'une deuxième forme de réalisation du capteur de l'invention et la figure 3B la courbe du rapport des puissances reçues par ses fibres réceptrices, et
- la figure 4 représente une vue schématique de la sonde du capteur de l'invention.

Trois terminaisons, ou extrémités, de fibres optiques constituant une sonde, dégagées de leurs gaines mécaniques, aux axes optiques parallèles, sont assemblées solidement à plat et polies simultanément selon un plan 4 perpendiculaire à l'axe des fibres . La fibre émettrice 1 est de faible ouverture numérique, soit le sinus de la moitié de l'angle d'ouverture du faisceau émis, par exemple 0,2 et de relativement faible diamètre de coeur, c'est-à-dire la portion intérieure dans laquelle se propage la quasi-totalité de la lumière, par exemple 0,2 mm. Cette fibre est reliée par son autre extrémité à la fenêtre de la diode électroluminescente 5, excitée par des impulsions de courant en provenance d'un générateur 6.

La première fibre réceptrice 2, la plus proche de la fibre émettrice 1, est de forte ouverture numérique, par exemple 0,4, et de plus fort diamètre de coeur, par exemple 0,4 mm pour recueillir une énergie, d'autant plus importante, réfléchie par une cible 13, ce qui améliorera d'autant le rapport signal/bruit en sortie du circuit photodiode-amplificateur 7.

La forte ouverture numérique de la fibre 2 est nécessaire pour que la cible, constituée par un plan 13 parallèle à la face externe 4 de la sonde, permette à cette fibre de recueillir le rayonnement en provenance de la totalité d'une tache lumineuse 14 formée par la fibre émettrice 1 sur la cible 13, ceci à partir d'un point 11, situé à proximité de la face 4, et défini comme l'intersection des rayons extrêmes des faisceaux associés aux deux fibres 1 et 2.

Le point 11 sera d'autant plus rapproché de la face de sortie 4 de la sonde que la distance $d_2$, entre les axes des fibres 1 et 2, sera faible.

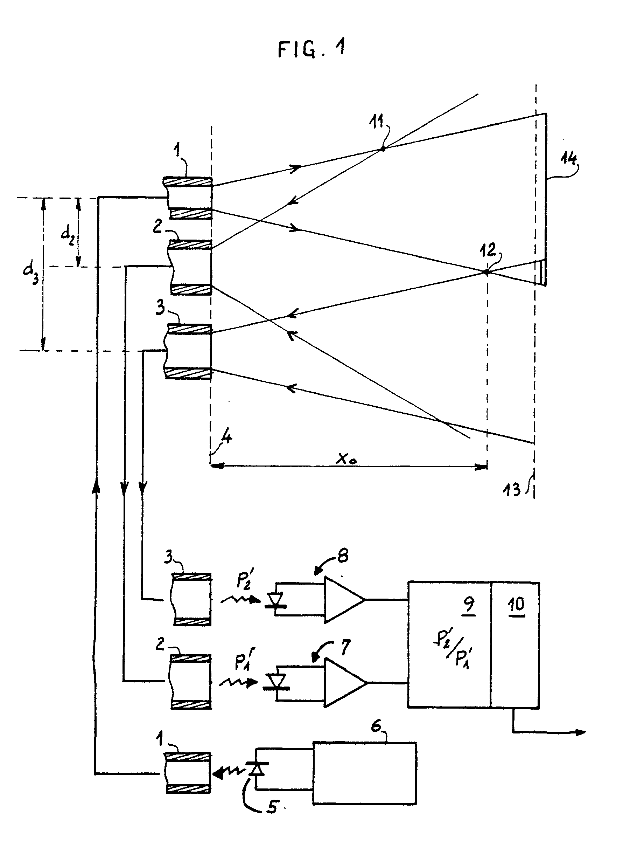

La deuxième fibre réceptrice 3 est également de fort diamètre de coeur, par exemple 0,4 mm, pour recueillir assez d'énergie et obtenir un rapport signal/bruit suffisant en sortie du circuit photodiode-amplificateur 8. Cependant, cette fibre est de faible ouverture numérique, par exemple 0,2, et elle est suffisamment éloignée de la fibre émettrice 1 pour que la lumière diffusée par la cible 13 n'entre dans la fibre 3 qu'à partir d'une distance située au delà du point 11, soit au point 12 sur la figure 1, défini comme précédemment mais pour les faisceaux associés aux fibres 1 et 3, et distant de Xo du plan 4.

En éloignant la cible de la sonde, c'est à partir de ce point 12 que des signaux sont reçus simultanément par les deux fibres réceptrices 2 et 3.

Xo sera d'autant plus grand que le décalage latéral $d_3$ de la deuxième fibre réceptrice 3 par rapport à la fibre émettrice 1 sera plus important.

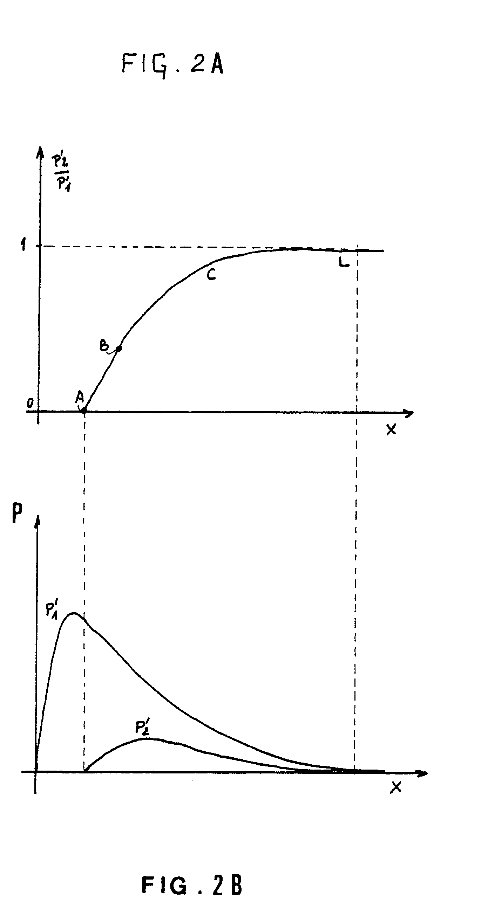

A titre d'exemple, pour $d_3 = 1,7$ mm et $d_2 = 0,8$ mm, $P'_2$ et $P'_1$ étant respectivement les puissances reçues par les photodiodes des circuits 8 et 7, le rapport $P'_2/P'_1$ est nul jusqu'au point A d'abscisse xo = 4 mm, sur la figure 2A, depuis lequel il commence à croître sensiblement linéairement, en fonction de x distance comptée à partir de la face externe 4 de la sonde, jusqu'au point B d'abscisse x = 5 mm. Ensuite la croissance du rapport $P'_2/P'_1$ entre les puissances reçues sur les fibres 3 et 2, en fonction de x, est de moins en moins rapide, jusqu'au point C d'abscisse 50 mm, où le rapport, encore mesurable, devient sensiblement constant et voisin de 1. La présence de la cible est détectable jusqu'au point L d'abscisse 180 mm, distance pour laquelle le rapport signal/bruit devient trop faible pour être détecté, comme le montrent les courbes des puissances reçues $P'_1$ et $P'_2$ de la figure 2B.

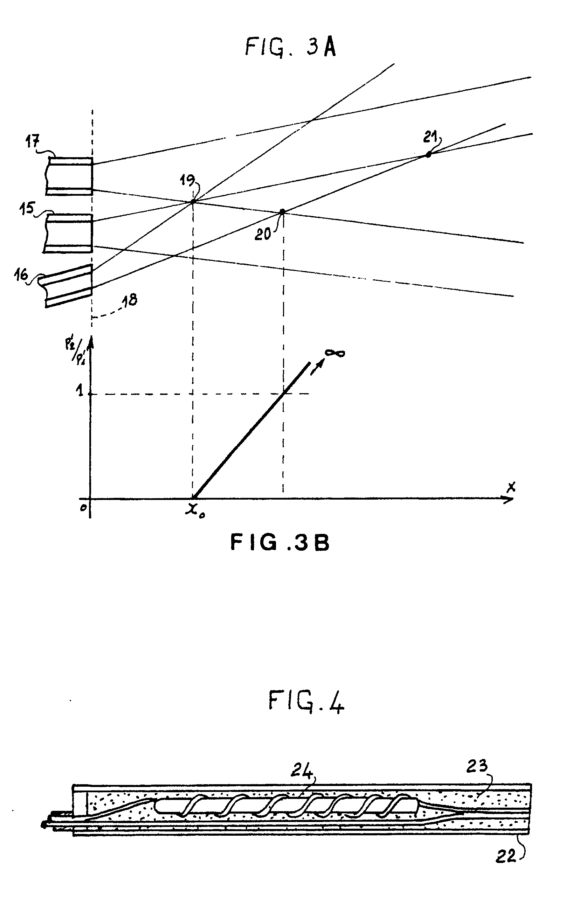

Le dispositif décrit ci-dessus présente l'intérêt d'une réponse $P'_2/P'_1 = f(x)$, fonction monotone et quasi linéaire près de son origine. Cependant une réponse également monotone, mais tendant vers un rapport $P'_2/P'_1$ infini, peut être obtenue en inclinant au moins la deuxième fibre réceptrice sur l'axe de la sonde, comme l'illustre la figure 3A.

Sur cette dernière figure, la fibre émettrice 15 se trouve placée entre les deux fibres réceptrices 16 et 17. L'axe optique de la fibre 16 est incliné sur l'axe de la sonde, soit l'axe de la fibre émettrice 15. L'intersection 19 des rayons externes des faisceaux associés aux fibres 15 e t 16, proche de la fibre réceptrice 17, est plus éloignée du plan de sortie de la sonde que l'autre intersection. Il en résulte que, si la cible passe par le point 19, toute la portion de la cible vue par la fibre 16 est illuminée.

Ce point 19 est aussi sensiblement à l'intersection du faisceau lumineux émis par la fibre 15 et du cône de réception défini par l'ouverture numérique de la fibre 17. Au point 20, à l'intersection des deux cônes de réception, les puissances $P'_1$ et $P'_2$ reçues par les fibres 16 et 17 pourront être égales, et au point 21, à l'intersection des cônes associés aux fibres 15, 16, le rapport $P'_2/P'_1$ devient infini (figure 3B).

Il est facile d'observer que lorsque la fibre 16 est convenablement inclinée, et ceci en fonction des ouvertures numériques des fibres 16 et 17, le point 21 peut être reporté à l'infini. Dès lors, le rapport $P'_2/P'_1$ devient infini à une distance x infinie. Il en résulte une réponse très linéaire $P'_2/P'_1 = f(x)$ dans toute l'étendue de la mesure.

Il est à noter que l'extrêmité de la fibre réceptrice inclinée 16 peut être polie perpendiculairement à son axe optique séparément des deux autres fibres et ensuite placée et ajustée en inclinaison. Ou bien cette fibre peut être placée inclinée au préalable et polie simultanément avec les deux autres fibres dans un même plan 18, ce qui sera effectué dans une réalisation préférée de l'invention.

Dans une telle réalisation, les trois fibres, de préférence des fibres à saut d'indices, donc à gaine optique, sont d'une composition coeur-gaine optique telle que verre/verre ou silice/silice. Après enlèvement de la gaine mécanique, elles sont placées dans des rainures gravées, avec précision par un procédé connu de photolithographie, sur un substrat 22 de verre de silice, ou de silicium, par exemple.

Ces fibres sont alors maintenues solidement en place au moyen d'un liant solide 23 tel qu'un verre à bas point de fusion chargé d'un pigment absorbant les radiations aux longueurs d'ondes de l'émission, pour éliminer les modes de propagation résiduelle dans les gaines optiques des fibres.

L'ensemble reçoit alors un polissage optique selon la face externe de la sonde, 4 ou 18.

En sortie de sonde, les fibres sont disposées à plat sur un ruban et dans une réalisation performante, au moins la fibre émettrice est enroulée en spirale sur un mandrin 24 d'environ 5 mm de diamètre, pour assurer une courbure bien définie sur une longueur de 10 à 20 cm, suffisante pour mélanger les modes de propagation dans le coeur de la fibre émettrice afin d'uniformiser l'intensité rayonnante de la tache lumineuse sur la cible.

A l'autre extrêmité, les fibres réceptrices aboutissent à des photodiodes P I N en circuit silicium intégré, lesquelles sont reliées à des amplificateurs, ici logarithmiques, acceptant les signaux P'$_1$ et P'$_2$ avec une dynamique d'au moins 4 décades et permettant un traitement du signal immédiat en réalisant les fonctions P'$_2$/P'$_1$ au moyen d'un simple amplificateur, donc ici différentiel 9, après une démodulation synchrone permettant d'éliminer l'influence du rayonnement ambiant. Le rapport P'$_2$/P'$_1$ peut alors être numérisé dans un convertisseur analogique-numérique et adressé à une table de correction numérique pré-enregistrée dans une mémoire numérique permanente 10 pour obtenir une réponse parfaitement linéaire en sortie, soit en code numérique, soit en tension, soit en courant, en fonction de la distance x mesurée. Typiquement, une précision de la mesure de la distance est de l'ordre de un ou quelques microns à quelques millimètres de la face externe de la sonde sur une gamme de mesure de quelques dixièmes de millimètres, et de l'ordre de quelques dixièmes de millimètres jusque 5 à 10 centimètres.

Les applications de ce capteur à fibres optiques tombent dans le domaine des mesures de distances précises sur une gamme de température étendue telle que dans des automatismes de procédés d'usinage et d'assemblage. D'autres applications concernent la métrologie sans contact.

Le dispositif se prête particulièrement bien à la réalisation de sondes pour des capteurs de proximité optoélectroniques.

**Revendications**

1.  Capteur de proximité et de déplacement à trois fibres optiques (1,2,3) de natures respectivement différentes, l'une émettrice (1) et les deux autres réceptrices (2,3), dont des extrémités formant une sonde sont situées dans un même plan (4), l'autre extrémité d'une (1) des fibres étant reliée à un émetteur de rayonnement (5,6), les autres extrémités des deux autres fibres (2,3) étant reliées à des détecteurs distincts (7,8), caractérisé par le fait que les fibres optiques réceptrices (2,3) ont des ouvertures numériques différentes, la fibre (2) de plus grande ouverture numérique étant plus proche de la fibre émettrice (1) que celle (3) de faible ouverture numérique.

2.  Capteur de proximité et de déplacement à trois fibres optiques (1,2,3) de nature respectivement différentes, l'une émettrice (1) et les deux autres réceptrices (2,3), dont des extrémités formant une sonde sont situées dans un même plan (4), l'autre extrémité d'une (1) des fibres étant reliée à un émetteur de rayonnement (5,6), les autres extrémités des deux autres fibres (2,3) étant reliées à des détecteurs distincts (7,8), caractérisé par le fait que l'une (16) au moins des fibres réceptrices a son axe optique incliné sur l'axe optique de la fibre émettrice (15), pour qu'il existe une position proche de la cible (19), pour laquelle toute la portion de la cible vue par la fibre la plus inclinée (16) est illuminée, alors que toute la portion de la cible vue par la fibre la moins inclinée (17) n'est pas illuminée, et une position éloignée de la cible (21), pour laquelle toute la portion de la cible vue par la fibre la plus inclinée (16) n'est pas illuminée, alors qu'une partie relativement importante de la portion de la cible vue par la fibre la moins inclinée (17) est illuminée.

3.  Capteur selon l'une des revendications 1 ou 2, dans lequel les fibres sont disposées à plat sur un substrat (22), maintenues par un liant solide (23) de faible coefficient de dilation linéaire, l'ensemble étant poli selon une face externe plane (4 ; 18), perpendiculaire à l'axe optique de la fibre émettrice (1 ; 15).

4.  Capteur selon l'une des revendications 1 à 3, caractérisé par le fait que, dans la sonde, la fibre émettrice (1;15) est enroulée en spirale sur un cylindre de révolution rigide (24).

5.  Capteur selon l'une des revendications 1 à 4, caractérisé par le fait que les fibres optiques, débarrassées de leurs gaines mécaniques, sont noyées dans un liant solide (23) chargé d'un pigment absorbant pour les longueurs d'ondes émises par la diode émettrice (5).

6.  Capteur selon l'une des revendications 1 à 5, caractérisé par le fait que les fibres réceptrices aboutissent à des photodiodes reliées à des amplificateurs logarithmiques (7,8) reliés à un amplificateur différentiel (9), pour calculer directement le rapport des puissances reçues par elles.

7. Capteur selon l'une des revendications 1 à 6, caractérisé par le fait qu'il comporte un convertisseur analogique-numérique pour convertir le rapport des puissances reçues et l'adresser à une table de correction de linéarité pré-enregistrée dans une mémoire numérique (10).

## Claims

1. Proximity and displacement sensor having three optical fibers (1,2,3) of different kinds respectively, one transmitting (1) and the other two receiving (2,3), whose probe forming ends are situated in a same plane (4), the other end of one (1) of the fibers being connected to a radiation transmitter (5,6), the other ends of the other two fibers (2,3) being connected to separate detectors (7,8), characterized in that the receiving optical fibers (2,3) have different numerical apertures, the fiber (2) with the largest numerical aperture being closer to the transmitting fiber (1) than the one (3) with small numerical aperture.

2. Proximity and displacement sensor having three optical fibers (1,2,3) of different kinds respectively, one transmitting (1) and the other two receiving, whose probe forming ends are situated in a same plane (4), the other end of one (1) of the fibers being connected to a radiation transmitter (5,6), the other ends of the other two fibers (2,3) being connected to separate detectors (7,8), characterized in that one (16) at least of the receiving fibers has its optical axis slanted with respect to the optical axis of the transmitting fiber (15) so that there are a position (19) close to the target, for which all the portion of the target seen by the most slanted fiber (16) is iluminated, whereas all the portion seen by the least slanted fiber (17) is not illuminated, an a position (21) remote from the target, for which all the portion of the target seen by the most slanted fiber (16) is not illuminated, whereas a relatively important part of the portion of the target seen by the least slanted fiber (17) is illuminated.

3. Sensor as claimed in one of claims 1 or 2, wherein the fibers are laid flat on a substrate (22), held in position by a solid binder (23) having a low linear expansion coefficient, the assembly being polished over one flat external face (4;18) perpendicular to the optical axis of the transmitting fiber (1;15).

4. Sensor as claimed in one of claims 1 to 3, wherein in the probe, the transmitting fiber (1;15) is wound in a spiral on a rigid cylinder of revolution (2,4).

5. Sensor as claimed in one of claims 1 to 4, wherein the optical fibers, freed of their mechanical sheaths, are buried in a solid binder (23) charged with a pigment which is absorbant for the wavelength transmitted by the transmitting diode (5).

6. Sensor as claimed in one of claims 1 to 5, wherein the receiving fibers end at photodiodes connected to logarithmic amplifiers (7,8) connected to a differential amplifier (9) for calculating directly the ratio of the powers received thereby.

7. Sensor as claimed in one of claims 1 to 6, including an analog-digital converter for converting the ratio of the powers received and addressing it to a linearity correction table restored in a digital memory.

## Ansprüche

1. Näherungs- und Wegsensor mit drei optischen Fasern (1,2,3) verschiedener Natur, die eine sendend (1) und die beiden anderen empfangend (2,3), deren eine Sonde bildende Enden in einer gleichen Ebene (4) liegen, wobei das andere Ende einer (1) der Fasern mit einen Strahler (5,6) verbunden ist und die anderen Enden der beiden anderen Fasern (2,3) mit verschiedenen Detektoren (7,8) verbunden sind, dadurch gekennzeichnet, daß die empfangenden optischen Fasern (2,3) verschiedene numerische Aperturen besitzen, wobei die Faser (2) mit der größeren numerischen Apertur der sendenden Faser (1) näher liegt als die (3) mit geringer numerischer Apertur.

2. Näherungs- und Wegsensor mit drei optischen Fasern (1,2,3) verschiedener Natur, die eine sendend (1) und die beiden anderen empfangend (2,3), deren eine Sonde bildende Enden in einer gleichen Ebene (4) liegen, wobei das andere Ende einer (1) der Fasern mit einem Strahler (5,6) verbunden ist und die anderen Enden der beiden anderen Fasern (2,3) mit verschiedenen Detektoren (7,8) verbunden sind, dadurch gekennzeichnet, daß die optische Achse zumindest einer (16) der empfangenden Fasern zur optischen Achse der sendenden Faser (15) geneigt ist, damit eine zur Auftreffplatte nahe Position (19) besteht, für welche der ganze von der am stärksten geneigten Faser (16) gesehene Teil der Auftreffplatte beleuchtet ist, während der ganze von der am wenigsten geneigten Faser (17) gesehene Teil der Auftreffplatte nicht beleuchtet ist, und eine von der Auftreffplatte entfernte Position (2'), für welche der ganze von der am stärksten geneigten Faser (16) gesehene Teil der Auftreffplatte nicht beleuchtet ist, während ein relativ großer Teil des von der am wenigsten geneigten Faser (17) gesehenen Teiles der Auftreffplatte beleuchtet ist.

3. Sensor gemäß einem der Ansprüche 1 oder 2, bei welchem die Fasern flach auf einer Substrat (22) angeordnet sind und von einem festen Bindemittel (23) mit schwachem linearem Ausdehnungskoeffizient gehalten werden, wobei das Ganze entlang einer flachen äußeren, zur optischen Achse der sendenden Faser (1;15) senkrecht stehenden Seite (4;18) Poliert ist.

4. Sensor gemäß einem der Ansprüche 1 bis 3, dadurch gekennzeichnet, daß die sendende Faser (1;15) in der Sonde spiralförmig um einen starren Drehzylinder (24) gewickelt ist.

5. Sensor gemäß einem der Ansprüche 1 bis 4, dadurch gekennzeichnet, daß die optischen Fasern, welche von ihrer mechanischen Umhüllung befreit wurden, in ein festes Bindemittel (23) geraucht sind, welches mit einem für die von der sendenden Diode (5) ausgesendeten Wellenlängen absorbierenden Pigment gefüllt ist.

6. Sensor gemäß einem der Ansprüche 1 bis 5, dadurch gekennzeichnet, daß die empfangenden Fasern an Photodioden anstoßen, welche mit logarithmischen Verstärkern (7,8) verbunden sind, welche wiederum mit einem Differentialverstärker (9) verbunden sind, um direkt das Verhältnis der von ihnen empfangenen Leistungen zu berechnen.

7. Sensor gemäß einem der Ansprüche 1 bis 6, dadurch gekennzeichnet, daß er einen Analog-/Digital-Wandler umfaßt, um das Verhältnis der empfangenen Leistungen umzuwandeln und an eine in einem Digitalspeicher (10) vorgespeicherte Linearitätsberichtigungstabelle.

FIG. 1

FIG. 2A

FIG. 2B

FIG. 3A

FIG .3B

FIG.4